# EUROPEAN PATENT APPLICATION

(11) **EP 3 489 596 A1**
(43) Date of publication of application: **29.05.2019**
(21) Application number: 18206700.9
(22) Date of filing: 16.11.2018
(51) Int. Cl.: F25B 13/00, F25B 41/04, F24F 1/02, F24F 1/022

(54) **IMPROVED HEAT PUMP APPARATUS FOR AIR RENEWAL IN DOMESTIC ROOMS AND THE METHOD OF OPERATION THEREOF**

(30) Priority: 22.11.2017 IT 201700133788
(71) Applicant: Evolving Living Innovation Center E.L.I.C. S.r.l., 33074 Fontanafredda (PN) (IT)
(72) Inventor: FLORIAN, Robert, 33084 Cordenons (IT)
(74) Representative: Giugni, Diego

(57) **Abstract**

The present invention refers to a heat pump apparatus for air renewal in rooms and, in particular, to an improved compact heat pump apparatus with components contained in a single casing to be mounted inside a room. Moreover, the invention is related to a method of operation of said apparatus inside a room able to activate a heat recovery action and/or renewal of stale air, heating, cooling or dehumidification.

## Description

### TECHNICAL FIELD OF THE INVENTION

The present invention refers to an improved heat pump apparatus for air renewal in rooms and, in particular, to a compact heat pump apparatus with components contained in a single casing to be mounted inside a room. Moreover, the invention is related to a method of operation of said apparatus or method for conditioning the air inside a room that may activate an action of heat recovery and/or renewing stale air, heating, cooling or dehumidification.

### STATE OF THE PRIOR ART

Heat pump apparatuses for air conditioning are well known and have been widely used for a long time. In effect, the heat pump system is widely used because it allows greater performance with lower energy consumption compared to so-called passive apparatuses, i.e. those equipped with a passive heat recovery system that does not involve thermodynamic work but simply a thermal exchange between the incoming and outgoing air flows.

In general, a heat pump system carries out a thermal exchange between two fluids: the working fluid that flows inside a closed circuit is called the primary fluid; the fluid that flows through the system and exchanges thermal energy in terms of power, with the primary fluid is called the secondary fluid. The primary fluid may be synthetic or natural depending on specific needs or preferences; generally the secondary fluid is air or water. The simplest system for obtaining an apparatus comprises conventionally: a compressor supplying energy in the form of work of compression to a gas, compressing it, heating it and setting it in motion; the hot gas arrives at a first heat exchanger, called a condenser, where energy is transferred from the primary fluid to the secondary fluid, the gas undergoes a phase change from gas to liquid; the liquid reaches a laminar element inside of which it expands and cools; the cool fluid reaches a second heat exchanger, called an evaporator, where the secondary fluid transfers energy to the primary fluid in the form of heat, causing it to evaporate and return to the gaseous state. Subsequently, the circuit ends with the return of the gas to the compressor to start the thermodynamic cycle again.

The cycle described above may be used in apparatuses that carry out a renewal of the air inside a room. In effect, with the help of a duct that connects the inside and outside of the room, the stale air is expelled, and at the same time "new" air is sucked in and introduced into the room. The renewed air flows through the same heat exchanger where, depending on the outside temperature, it acts as a condenser or evaporator, heating or cooling the incoming air, i.e. an inversion of the thermodynamic cycle is applied.

The apparatus described above is rather bulky in terms of construction due to the need for an efficient thermodynamic circuit. In effect, it is well known that to switch the summer/winter function, i.e. to reverse the thermodynamic cycle by means of a conventional four-way valve, it is necessary to create sufficient working pressure to move and maintain the piston of said valve in the desired position. In particular, such movement is controlled by a pilot valve which, activated electrically, intercepts a thin connecting duct between the two ends of the four-way valve in order to direct a small quantity of fluid towards one of said ends so as to push said piston into the predetermined summer working position. However, if the pressure at the inlet and outlet of the four-way valve does not reach a predefined value, the fluid diverted by the pilot valve will not be sufficiently pressurized to allow the piston to move into the desired position. In other words, a pressure difference upstream and downstream of the compressor of more than 2.5 bar must be created. This generally involves the use of rotary compressors, and therefore compressors equipped with a cooling capacity of not less than 0.8KW. Such capacity requires a rather large compressor when compared to domestic rooms.

In addition, the other components of the thermodynamic circuit must also be suitable for the compressor. Therefore, the relevant dimensions are large and are added to those of the compressor resulting in a very bulky, oversized and energy-intensive apparatus for domestic-sized rooms.

From the above, it is apparent that the known apparatuses are not at all suitable to be installed in domestic-type rooms, such as kitchens, living rooms, bedrooms, bathrooms.

In order to solve these drawbacks, a heat pump apparatus has been proposed comprising a closing/opening valve that intercepts the flow of the working fluid upstream of the compressor and downstream of the four-way valve. Such apparatus is described in the international patent application PCT/IT2017/000063.

The provision of the closing/opening valve in the predetermined position allows one advantageously to close the passage of the working fluid at the inlet of the compressor until a pressure difference of at least 2.5 bar between discharge and return to the compressor is reached. Once this value is reached, the valve abruptly opens so as to cause a thrust of the working fluid on the command piston of the four-way valve towards the desired position.

Operating in this way, it is possible to use small compressors, thus with reduced power, making the thermodynamic circuit operate in one direction and in the opposite direction.

Nevertheless, it has been seen that in some cases the aforesaid apparatus is not able to operate a full (and therefore proper) movement of the piston in the "summer position" or in the "winter position", i.e. in the flow position of the compressed fluid as it leaves the compressor towards the condenser or towards the evaporator.

In other words, it has been experimentally seen that, after the machine has been switched on, the piston occupies an intermediate position between the summer and winter positions and it is no longer possible to move it fully into one or the other position, even when working with the aforesaid closing/opening valve.

The apparatus therefore becomes fully inefficient because the working fluid, instead of following a single chosen path, may follow multiple paths, especially the one returning to the compressor. Since it is not possible to correct such a defect, the machine must be fully replaced.

### SUMMARY OF THE INVENTION

The object of the present invention is therefore to provide a heat pump apparatus for air renewal provided with a compact construction suitable to be installed inside a room for domestic use and that overcomes the aforesaid drawbacks.

This object is achieved by an improved heat pump apparatus comprising small, functional components but piloted in such a way as to allow adequate functionality of the heat pump in all climatic conditions.

Consequently, a first object of the present invention is an improved heat pump apparatus for air renewal in rooms with advantageously compact dimensions so as to allow assembly inside the room with a minimum use of space.

A second object is an improved heat pump apparatus that is particularly efficient from the point of view of the overall energy balance of the environment to be conditioned.

A third object is an improved heat pump apparatus equipped with simple and reliable components controlled in such a way as to ensure the correct functionality of the thermodynamic cycle according to the desired environmental conditioning.

A further object is an improved heat pump apparatus that is particularly versatile and able to heat or cool a room and at the same time renew the air, recover heat and/or dehumidify.

A still further object is a method of operation of a heat pump apparatus for air renewal in domestic rooms.

### BRIEF DESCRIPTION OF THE FIGURES

Further features and advantages of the improved domestic heat pump apparatus with renewal of the air of the invention will become more apparent from the following description of an embodiment provided purely by way of example with reference to the following figures, wherein:
- figure 1 shows a diagram of the thermodynamic and aeraulic circuit of the apparatus according to the present invention in a first operating condition;
- figure 2 shows a diagram of the thermodynamic and aeraulic circuit of the apparatus of the invention in a second operating condition;
- figure 3 shows a diagram of the thermodynamic and aeraulic circuit of the apparatus of the invention in a third operating condition;
- figure 4 shows a diagram of the thermodynamic and aeraulic circuit of the apparatus of the invention in a fourth operating condition;
- figure 5 shows a diagram of the thermodynamic and aeraulic circuit of the apparatus of the invention in a fifth operating condition.

### DETAILED DESCRIPTION OF THE INVENTION

The idea behind the present invention is to design a heat pump apparatus for air renewal with small components that may be assembled in a single container to be installed in a domestic-type room where, in effect, the dimensions are important. At the same time, the thermodynamic system must be efficient and must not alter the total energy balance of the room to be conditioned.

Therefore, in order to reduce the overall dimensions, it was thought that the simplest solution would be to reduce the size of the components and, above all, the displacement of the compressor. It follows that the working pressure of the fluid drops to a value lower than that required to create the aforesaid differential between the inlet and outlet in the four-way valve, therefore insufficient to move the internal piston that diverts the flow of working fluid to one of the two heat exchangers depending on the "summer" or "winter" function.

It has been thought to design the thermodynamic circuit in such a way as to avoid this loss of pressure simply without being forced to increase the dimensions of the components and without running into the drawback found in the aforesaid apparatus according to the patent application PCT/IT2017/000063.

With reference to the figures, an improved heat pump apparatus for air renewal in domestic rooms through the thermodynamic and aeraulic circuit is thereof shown.

The apparatus is collectively indicated at the reference number 1 and comprises a compressor 2, a four-way valve 3, a first heat exchanger 4 associated with a first fan 5 for the intake of air in the room, a laminar element 6, a second heat exchanger 7 associated with a second fan 8 for the introduction of air into the room. All the aforesaid components are contained in a box element 9 intended to be fixed to a perimeter wall W inside IN a domestic room.

The box element 9 is then connected with the environment outside OUT of the room by means of a duct 10 provided with a longitudinal and middle septum 11 for dividing the same duct preferably into two symmetrical and distinct portions: a first portion 10A for expelling of the air inside the room, which communicates with a first channel 12 of the box element 9 wherein the first heat exchanger 4 is positioned, a second portion 10B for introducing air from outside OUT of the room, which communicates with a second channel 13 wherein the second heat exchanger 7 is positioned. This configuration represents the aeraulic circuit of the apparatus 1 of the present invention.

The duct 10 is substantially straight along an axis X-X perpendicular to the wall W of the room in which the apparatus 1 is installed. However, the first 12 and second 13 channels of the box element extend along a common axis Y-Y perpendicular to said axis X-X of the duct 10.

It should be noted that the first channel 12 and the second channel 13 are kept separate and in communication with the respective first portion 10A and second portion 10B of the duct 10 by means of a valve 14. Preferably, the valve 14 is a butterfly valve. Therefore, as shown in the figures, it comprises a central hinge 14A around which two diametrically opposed wings 14B rotate.

Advantageously, the apparatus 1 comprises a solenoid valve 15 positioned downstream of the compressor 2, i.e. on the discharge side thereof. The solenoid valve 15 has the function of closing the passage of the working fluid at the inlet of the four-way valve 3 in order to create a pressure imbalance between the discharge side of the compressor and the inlet of the four-way valve. In other words, by keeping the solenoid valve 15 fully closed, a high pressure on the discharge side of the compressor and a low pressure on the inlet side of the four-way valve 3 is produced. Such pressure difference tends to increase, and when it reaches a value greater than 2.5 bar, the valve 15 is opened, in effect activated by high pressure. In this way, the sudden imbalance of pressure causes the thrust of the piston of the four-way valve, normally commanded by the pilot valve, so as to move it to the desired position, i.e. the position wherein the working fluid is first diverted to one rather than to the other of the two heat exchangers, first 4 and second 7.

The apparatus 1 further comprises a temperature sensor (not shown) positioned in the second portion 10B of the duct 10 to detect the inlet temperature. A further temperature sensor (not shown) is provided near the apparatus or at a predetermined point in the room and connected to the apparatus to detect the temperature of the inside environment.

Further sensors (not shown) such as humidity sensors, room inlet and outlet air flow sensors, pressure sensors for the working fluid in the thermodynamic circuit, may be provided as preferred accessories of the apparatus 1.

All the aforesaid functional components, devices, sensors and valves are operatively connected to a command and control unit (not shown) able to receive therefrom signals representative of the individual state thereof, and adapted to process such signals in values to be compared with preset values and selectable in such a way as to in turn send command signals to modify the functionality of the apparatus based on said comparison.

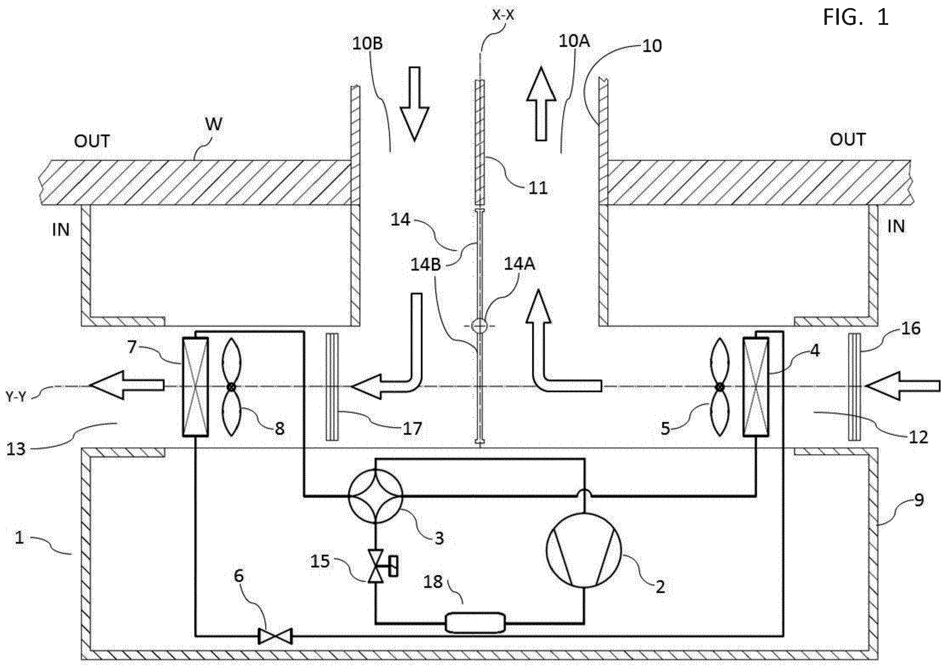

In particular, as shown in figure 1, the two wings 14B of the butterfly valve 14 are aligned on the same line identified by the septum 11 so as to separate the two channels, first 12 and second 13, along the common axis Y-Y and to put them in communication with the respective first 10A and second 10B portions of the duct 10.

In this position, according to a first operating condition, the first 5 and second 8 fans are activated so as to suck the air in the room into the inside IN of the apparatus 1 through the first channel 12 and expel it to the outside OUT and, at the same time, to suck the air from outside OUT and introduce it to the inside IN through the second channel 13, as shown by the thicker arrows. At this point, if the sensor adapted to detect the temperature of the air entering the room (i.e. in the second portion 10B of the duct 10) signals a value within a predetermined comfort range, then the apparatus 1 is controlled in such a way as to keep said first 5 and second 8 fans active for air renewal, without activating the thermodynamic circuit. In other words, the system would work passively to renew the air inside the room.

The predetermined comfort range may be selected according to specific needs or preferences. Normally, a temperature range considered comfortable may be from 15°C to 27°C, considering that the incoming air mixes with the air already present in the environment and therefore tends not to modify substantially the inside temperature, whether lower or higher than the incoming one. Preferably, the comfort temperature ranges from 18°C to 25°C.

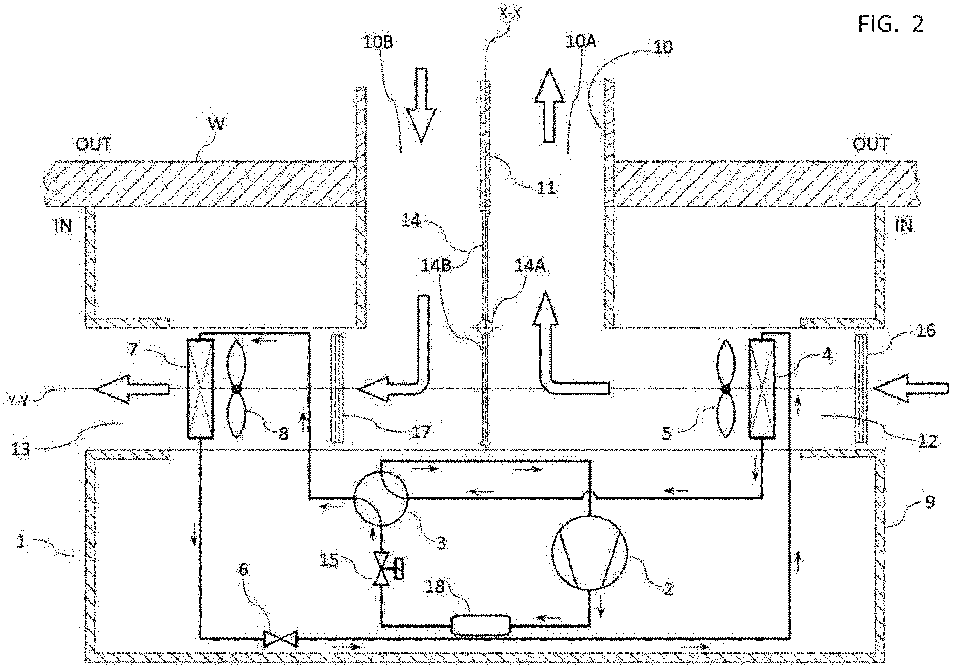

According to a second operating condition, as shown in figure 2, the aeraulic circuit described previously with reference to figure 1 remains unchanged. Conversely, in the thermodynamic circuit, when, following the activation of said first 5 and second 8 fans, the sensor positioned along the second portion 10B of the duct 10 records a temperature lower than the aforesaid comfort range, for example 15°C or less, the command and control unit sends a start signal to the compressor 2. However, since the compressor 2 has a low cooling capacity, i.e. less than 0.8 KW, the pressure created inside the four-way valve 3 is not enough to move the piston thereof into the position that allows the aforesaid passage of the working fluid in the proper and predetermined direction. In effect, when the compressor is switched on, the internal piston that regulates the operation of the valve may be blocked in a random position so that the working fluid escapes in all three ways, i.e. towards the two heat exchangers and towards the compressor. Obviously, the fluid will choose the shortest path, i.e. the one returning to the compressor, thus creating a closed recirculation loop involving only said compressor. The solenoid valve 15, envisaged according to the invention, finds itself in a closed condition and therefore blocks the fluid between the outlet from the compressor 2 and the four-way valve 3. This condition thus creates a pressure differential between the discharge side of the working fluid at the compressor 2 and the inlet of the four-way valve 3.

When the aforesaid pressure difference reaches a predetermined threshold value, e.g. greater than 2.5 bar, the four-way valve 3 is first activated by powering the coil of the pilot valve thereof (not shown). In this way, the four-way valve 3 is arranged to pass the working fluid exiting the compressor 2 to the second heat exchanger 7. However, since the solenoid or decompression valve 15 is closed, there is not enough pressurized fluid to actually move the piston to the desired position. Therefore, the solenoid valve 15 is opened, thus creating an abrupt pressure differential downstream of the compressor 2 and upstream of the four-way valve 3, which allows the piston of said valve to move and lock in the predetermined position of passage of the pressurized fluid. It must be kept in mind that the valve piston is locked in the correct position by the subsequent persistence of the pressure differential between the discharge and suction of the compressor. It should be noted that in normal conditions the piston could already be in the position for diverting the fluid coming from the compressor to the second exchanger 7, i.e. in the heating position ("winter" position), since the pressure inside the thermodynamic circuit is in equilibrium and, consequently, the default pilot valve is in such a position as to allow the piston to maintain such position. Moreover, it should be kept in mind that by arranging the closing/opening valve 15 between the compressor 2 and the four-way valve 3, i.e. downstream of the compressor 2 on the discharge side and upstream of the four-way valve 3 on the inlet side thereof, it has been observed that the aforesaid serious drawback of locking the piston of the four-way valve 3 in the intermediate position when the closing/opening valve 15 is instead located on the suction side of compressor 2, is fully eliminated.

In this way, the thermodynamic circuit of the heat pump apparatus is fixed in the heating function, i.e. in the winter function. Therefore, when the hot working fluid is in the second heat exchanger 7, it transfers heat to the air sucked in from the outside OUT by the fan 8 through the second portion 10B of the duct 10, communicating, as explained previously, with the second channel 13, wherein said second heat exchanger 7 and said second fan 8 are respectively positioned. As a result, cold, fresh air from the outside is heated up and introduced into the room.

Subsequently, the condensed working fluid then passes through the laminar element 6 to then evaporate, absorbing heat inside the heat exchanger 4 positioned inside the first channel 12 of the casing 9 of the apparatus 1. Here, the warm and stale air from the inside of the room flows through the first heat exchanger and transfers heat to the working fluid. The stale and cooled air is then expelled to the outside through the first portion 10A of the duct 10, while the preheated working fluid passes through the four-way valve 3 where it is directed towards the inlet of the compressor 2 in order to start a new thermodynamic cycle for the treatment of the incoming cold outside air.

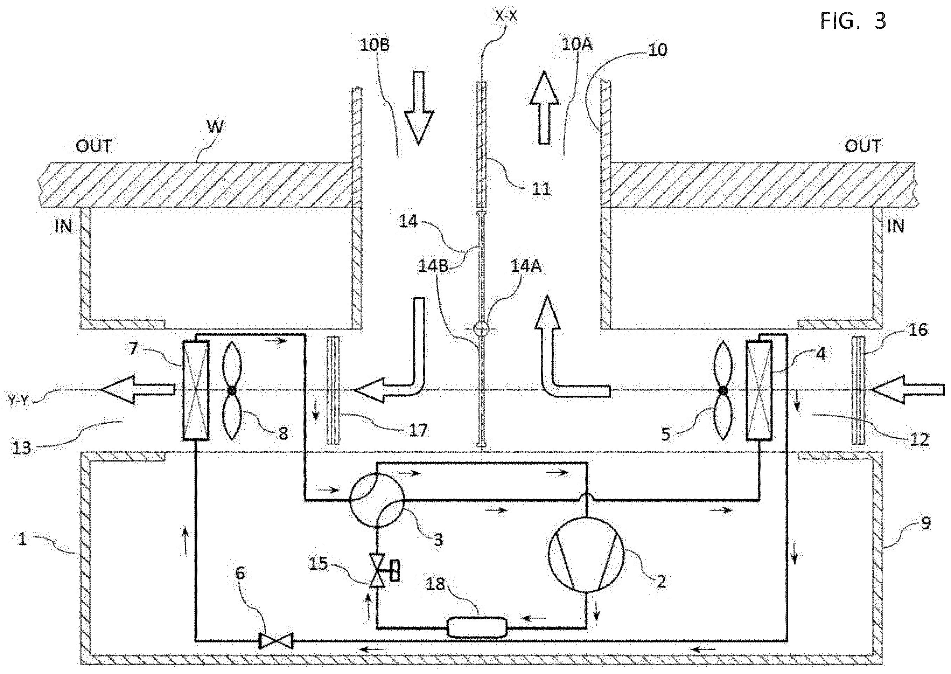

According to a third operating condition, as shown in figure 3, the aeraulic circuit described previously with reference to figure 2 remains unchanged. On the contrary, the thermodynamic circuit is inverted with respect to the one shown in figure 2. In effect, if, after activation of the two fans, first 5 and second 8, the sensor positioned in the second portion 10B of the duct 10 should register an input temperature higher than the comfort temperature, for example 27°C, then the command and control unit will activate the compressor 2. As explained above, when the compressor is switched on, the four-way valve 3 diverts the discharge gas directly towards the suction as the internal piston that regulates its operation is locked in a random position (or, as explained above, in the position for sending the flow to the second heat exchanger 7). The de-energized solenoid valve 15 is in a closed condition and therefore fully blocks the gas on the discharge side of the compressor 2 before the entry into the four-way valve 3. This condition thus creates a pressure differential between the working fluid discharge side of the compressor 2 and the inlet of the four-way valve 3. When the aforesaid pressure difference reaches a predetermined threshold value, for example greater than 2.5 bar, as previously, the solenoid or decompression valve 15 is activated, i.e. it is fully and abruptly opened, thus creating a sudden pressure differential downstream of the compressor 2 and upstream of the four-way valve 3, allowing the piston of the same valve to move and lock properly and without jamming in the position of passage of the pressurized fluid. The locking of the valve piston in the proper position is ensured by the subsequent persistence of the pressure differential between the discharge and suction of the compressor 2. As previously, if the four-way valve 3 was in the "winter" position, the pilot valve would be energized to allow the piston of the four-way valve 3 to be moved to the desired position and, due to the aforesaid pressure effect, would be maintained in this position.

In this case, the four-way valve 3 moves and locks in the position of passage of the fluid under pressure, and thus heated, directly to the first exchanger 4.

In this way, the thermodynamic circuit of the heat pump apparatus is fixed in the cooling function, i.e. in the summer function. Therefore, when the hot working fluid is in the first heat exchanger 4, it transfers heat to the air sucked in from the inside IN by the fan 5 through the first channel 12 communicating, as explained previously, with the first portion 10A of the duct 10 wherein said first exchanger 4 and said first fan 5 are respectively positioned. As a result, hot, stale air from the inside is superheated and expelled from the room.

Subsequently, the cooled working fluid passes through the laminar element 6 to be able to evaporate, absorbing heat inside the second heat exchanger 7 positioned inside the second channel 13 of the casing 9 of the apparatus 1. Here the hot air of the outside environment enters through the second portion 10B of the duct 10 to pass into the second channel 13 and move through the second exchanger 7, releasing heat to the working fluid. Simultaneously, the preheated working fluid passes through the four-way valve 3 where it is directed towards the inlet of the compressor 2 so as to start a new thermodynamic cycle for the treatment of the incoming hot outside air.

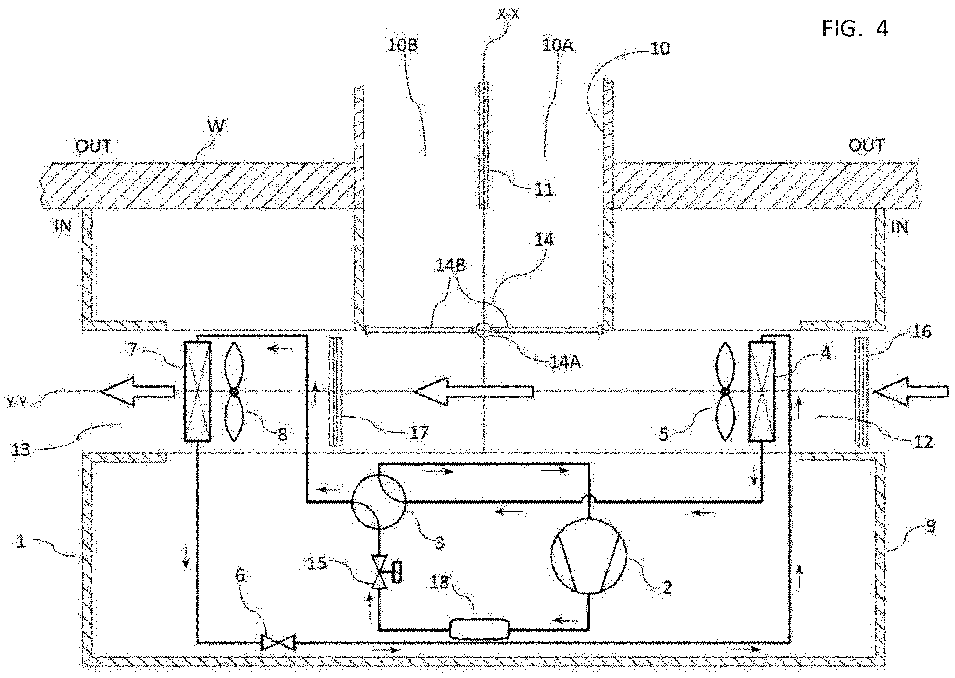

In accordance with a fourth operating condition, as shown in figure 4, the aeraulic circuit, which in the previous conditions remains constant, in the present case is modified. In effect, the butterfly valve 14 is rotated on its axis identified by the hinge 14A by 90° so as to bring the two wings 14B to close each of the two portions, first 10A and second 10B, of the duct 10 and, at the same time, putting in direct and rectilinear communication along the axis Y-Y the two channels, first 12 and second 13, of the casing 9.

It is apparent that in this configuration the apparatus 1 is insulated from the outside, while the inside air drawn in by the first channel 12 passes into the second channel 13 for introducing air into the room.

In addition, the thermodynamic circuit is activated in order to function as a dehumidifier of the indoor air of the room. In particular, the first fan 5 for sucking air from the room is switched on. Due to the aforesaid configuration, the inside air is sucked in by said first fan 5 in the first channel 12 and then passes directly into the second channel 13 of the casing 9 of the apparatus 1. Subsequently, the compressor 2 is switched on and, as previously with reference to the "winter" function, the four-way valve 3 is activated after a predetermined period of time and then the solenoid valve 15 is also activated in order to direct the hot and pressurized working fluid coming from the compressor 2 directly into the second heat exchanger 7. Thus, the air inlet in the first channel 12 flows through the first exchanger 4 where it condenses and then passes directly into the second channel 13. In the first channel 12, the hot and humid air comes into contact with the first heat exchanger 4 into which flows the working fluid cooled after having passed through the second exchanger 7 and through the laminar valve 6. As a result, the hot and humid air condenses on the first cold exchanger 4, yielding its moisture to then be reintroduced dehumidified in the room.

The aforesaid dehumidification cycle, as is known, may cause the formation of frost on the outside surface of the first exchanger 4. Therefore, the apparatus 1 will be equipped with a defrosting system consisting, for example, in reversing the thermodynamic cycle for a short period until defrosting is achieved. Moreover, there will also be an extractable condensate drip tray for emptying or a drain directly to the outside or to a suitable place.

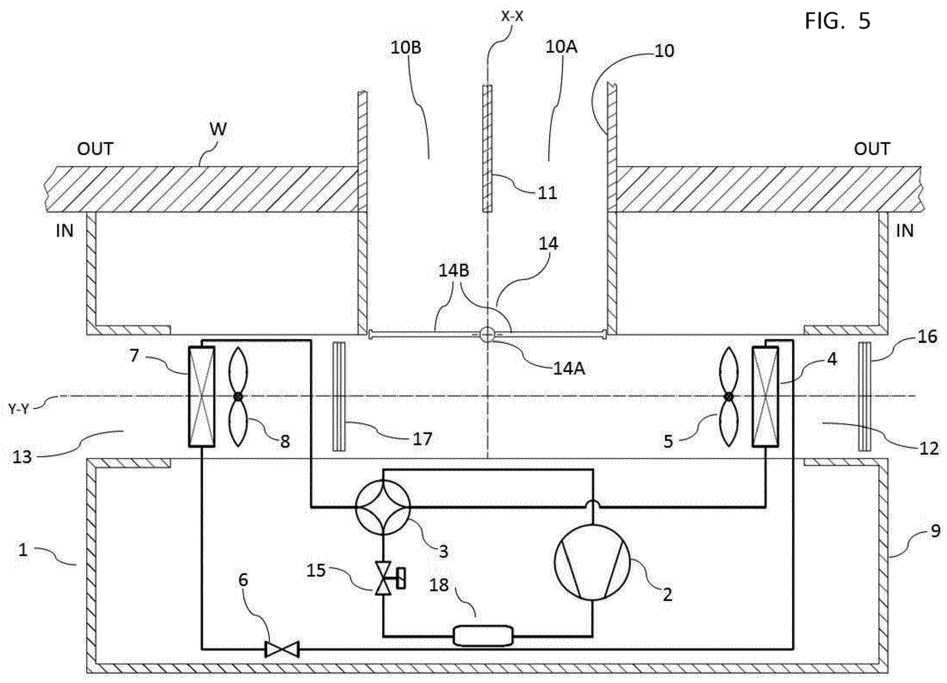

Figure 5 shows a fifth operating condition, wherein the thermodynamic circuit is deactivated, as in figure 1, while the butterfly valve 14 is activated so as to close the passage between the inside IN and the outside OUT of the room. In other words, the two wings 14B rotate with respect to the hinge 14A, respectively positioning themselves, one to close the passage between the first portion 10A of duct 10 for communication with the outside and the first duct 12 for the air inlet, and the other to close the passage between the second portion 10B of the duct 10 and the second channel 13 for the air outlet. This prevents contaminated air from entering the room.

In accordance with a variant embodiment of the invention, the thermodynamic circuit comprises advantageously an accumulator element 18 positioned so as to intercept the connection line between the discharge side of the compressor 2 and the inlet to the four-way valve 3. In particular, the accumulator element 18 is placed before the closing/opening valve 15 described above, i.e. between the discharge of the compressor 2 and the closing/opening valve 15. This accumulator element 18 is a sort of small reservoir that, positioned as specified, performs the function of accumulating the pressurized working fluid to allow an adequate flow of pressurized fluid for a sufficient time to obtain the aforementioned effect of full displacement of the piston of the four-way valve. In practice, in order to optimize the effectiveness of the closing/opening valve 15, it was decided to use the accumulator element 18 to obtain a quantity of working fluid at the desired pressure, i.e. over 2.5 bar, so as to further ensure the efficiency of the system according to the invention.

It has also been experimentally seen that maintaining said pressure value for a time between 1 and 3 seconds upstream of the four-way valve 3 is sufficient to obtain the desired effect. In addition, the use of the accumulator element 18 allows such timing to be optimally adjusted.

Preferably, the accumulator element 18 is an expanded tube with respect to the connection tube between the discharge of the compressor 2 and the four-way valve 3, inside of which there may be a filter to retain impurities and/or zeolite particles adapted to absorb any moisture present in the working fluid.

It must be kept in mind that the working fluid does not undergo a substantial change in its temperature in the section between the discharge side of the compressor 2 and the inlet to the four-way valve 3. In other words, reaching the aforesaid pressure value does not significantly affect the temperature of the working fluid, especially when the four-way valve 3 is arranged to send the fluid to the second exchanger 7 to heat the inside environment, i.e. when the apparatus 1 is in "winter" mode.

A further object of the present invention is a method of operation of a heat pump apparatus for air renewal in domestic rooms. Such method comprises the following steps in succession:
- providing a thermodynamic heat pump circuit provided with a compressor with a cooling capacity lower than 0.8KW;
- mounting said circuit entirely inside a domestic room and connecting the circuit with the outside through a duct;
- creating an air flow that passes through two heat exchangers of the thermodynamic circuit;
- activating the compressor 2 of the heat pump to thrust a working fluid into a four-way valve 3 while keeping the working fluid passage fully blocked downstream of the compressor 2 and upstream of the four-way valve 3 until a difference in pressure of the working fluid between the discharge side of the compressor 2 and the inlet of the four-way valve 3 greater than 2,5 bar is obtained;
- abruptly and fully unblocking the passage downstream of the compressor 2 and upstream of the four-way valve 3 once the aforesaid difference in pressure is reached in order to exert a thrust sufficient to command the full displacement and locking of the piston of the four-way valve 3 in the predetermined position.

In particular, the working fluid is blocked before entering the four-way valve 3 to create a low pressure at this point so that when the fluid is released it is abruptly and with high pressure thrust into the four-way valve 3. This strong thrust compensates for the lower power of the compressor 2 so that enough pressure is produced to move the four-way valve carriage 3 fully into the desired position and to maintain it in such position.

Preferably, the pressure is maintained at the aforesaid value for a time between 1 and 3 seconds before abruptly releasing the closing/opening valve 15. In addition, the aforesaid blockage may preferably take place by accumulating the working fluid at the aforesaid pressure upstream of the four-way valve 3.

During use, the step of creating the air flow in the two heat exchangers comprises sucking air from the inside to the outside through a first portion of the duct 10A communicating with a first channel 12 wherein a first heat exchanger 4 is positioned, and sucking air from the outside to the inside through a second portion of the duct 10B communicating with a second channel 13 wherein a second heat exchanger 7 is positioned.

The step of activating the compressor 2 is followed, before the release step, by a command step of the four-way valve 3 to divert the flow of the working fluid toward the first heat exchanger 4, which the air flow directed from the inside to the outside flows through (cooling during summer). Alternatively, this command step diverts the flow to the second heat exchanger 7, which the air flow from the outside to the inside flows through (heating during the winter).

According to a variant of the method, the step of creating the air flow that passes through the two heat exchangers, first 4 and second 7, is achieved along a single pathway inside the room and said command step of the four-way valve 3 is carried out in order to divert the flow of the working fluid towards the second heat exchanger 7, which the air entering the apparatus passes through.

Preferably, the method of operation is applied to an apparatus such as that described previously.

From what has been described previously, it is apparent that the improved heat pump apparatus for air renewal in rooms of the present invention allows advantageously to overcome the drawbacks cited previously with reference to the prior art, especially with reference to the apparatus according to the patent application PCT/IT2017/000063.

In effect, it is possible to provide a particularly compact appliance with low energy consumption to be installed in rooms intended for domestic use, without affecting the correct operation of the heat pump. This is made possible through the use of compressors with small dimensions, and consequently reduced power, in association with a working fluid circulation circuit intercepted by a closing/opening valve such as the solenoid valve described previously to compensate for the reduced power of the compressor. It should also be noted that the special positioning of the closing/opening valve between the compressor and the four-way valve makes it possible to advantageously eliminate the hazardous locking of the piston of the same four-way valve in an intermediate position.

In addition, the apparatus is advantageously versatile because it can work both to heat the room during the winter, and to cool it and dehumidify it in the summer. As explained, it may also be used simply as a ventilator to renew the stale air inside the room.

Therefore, from a health and comfort point of view, the apparatus allows the best conditions to be regulated according to the climatic situation and/or according to particular needs and preferences.

The apparatus may be further switched off and closed to the outside, simply to avoid the introduction of contaminants that could pass through conventional filters.

The further advantage of maintaining the aforesaid pressure value for a time between 1 and 3 seconds increases the guarantee of the effect on the piston of the four-way valve when the closing/opening valve is released. In addition, the provision of the accumulator element for the pressurized fluid makes the system even more effective.

Numerous variants of the apparatus of the invention may be adopted by those skilled in the art, without however departing from the scope of protection as defined by the accompanying claims.

For example, the second portion 10B of the duct 10 for communication with the outside or the second channel 13 of the casing 9 may be equipped with an air filter 17 to retain any unwanted particles such as dust or pollen and to prevent the entry of insects. Similarly, the first channel 12 of the casing 9 may comprise an air filter 16 to retain particles that appear inside the room and that could be deposited on the second exchanger 7 and the second fan 8 affecting the operation thereof.

Each of the two fans, first 5 and second 8, may be controlled by the command and control unit with variable revolutions in order to adapt to the range of working conditions of the apparatus, in turn dictated by the environmental/climatic conditions.

Several sensors may be installed in various positions inside and outside the casing 9 and the duct 10 of the apparatus to monitor conditions both inside and outside the room, such as temperature, humidity, atmospheric pressure.

The command and control unit may be connected to all devices, sensors, and moving parts of the apparatus in order to receive in real time signals representative of the status of the devices, process such signals to compare them with preset parameters in the working memory thereof and send command signals coordinated among all said devices and sensors.

It should also be kept in mind that the use of conventional compressors could be envisaged if there are no problems of size. In this case, obviously, there would not be the desired energy savings mentioned above. However, to overcome this drawback, the apparatus could be equipped with devices such as inverters to compensate for the higher energy consumption. Such apparatuses would obviously make sense in large rooms where it would be necessary to use more powerful compressors but not so powerful as to avoid the use of the additional solenoid valve.

## Claims

1. Heat pump apparatus (1) for air renewal in domestic rooms, comprising a box element (9) to be fixed to a wall (W) or ceiling inside a domestic room, the box element being adapted to contain a compressor (2) for the circulation of a working fluid under pressure, a four-way valve (3) for diverting the flow of said fluid towards a first heat exchanger (4) combined with a first fan (5) for extracting the inside air, or towards a second heat exchanger (7) combined with a fan (8) for introducing air into the room, a laminar element (6), and further comprising a duct (10) for connecting said box element with the outside, **characterized in that** an closing/opening valve (15) fully intercepts the flow of said working fluid downstream of the compressor (2) and upstream of the four-way valve (3).

2. Apparatus (1) according to claim 1, wherein said opening/closing valve (15) is a solenoid valve.

3. Apparatus (1) according to claim 1 or 2, wherein said duct (10) is provided with a longitudinal and middle septum (11) dividing the same duct into two symmetrical and distinct portions, a first portion (10A) for expelling the inside air of the room, which communicates with a first channel (12) of the box element (9) wherein the first heat exchanger (4) is contained, a second portion (10B) for introducing air from the outside of the room, which communicates with a second channel (13) of the box element (9) wherein the second heat exchanger (7) is contained.

4. Apparatus (1) according to claim 3, further comprising a valve (14) which alternately puts into communication said first portion (10A) of the duct (10) with said first channel (12) of the box element (9) and said second portion (10B) of the duct (10) with said second channel (13) of the box element (9), or closes the passage between said duct (10) and said first (12) and second (13) channels instead putting into direct communication said first (12) and second (13) channels.

5. Apparatus (1) according to any one of claims 1 to 4, further comprising an accumulator element (18) of the working fluid between the compressor (2) and the opening/closing valve (15).

6. Method of operation of a heat pump apparatus for air renewal of domestic rooms, comprising the following steps in succession:
- providing a thermodynamic heat pump circuit comprising a compressor with a cooling capacity lower than 0.8KW;
- mounting said circuit entirely inside a domestic room and connecting the circuit with the outside through a duct;
- creating an air flow that passes through two heat exchangers of the thermodynamic circuit;
- switching on the compressor of the heat pump to force a working fluid into a four-way valve while keeping the working fluid passage closed downstream of the compressor and upstream of the four-way valve until a difference in pressure of the working fluid between the discharge side of the compressor and the inlet of the four-way valve greater than 2.5 bar is obtained;
- abruptly opening the downstream passage of the compressor once the aforesaid difference in pressure is reached in order to exercise a thrust sufficient to command the full displacement and locking of the piston of the four-way valve in the preset position.

7. Method according to claim 6, wherein the step of creating the air flow in the two heat exchangers comprises the intake of air from the inside to the outside through a first portion of the duct communicating with a first channel wherein a first heat exchanger is positioned, and comprises the intake of air from the outside to the inside through a second portion of the duct communicating with a second channel wherein a second heat exchanger is positioned.

8. Method according to claim 6 or 7, wherein the step for activating the compressor is followed, before the unlocking step, by a command step of the four-way valve to divert the flow of the working fluid toward the first heat exchanger, which the air flow directed from the inside to the outside flows through.

9. Method according to claim 6 or 7, wherein the step of activating the compressor is followed, before the unlocking step, by a command step of the four-way valve to divert the flow of the working fluid toward the second heat exchanger, which the air flow directed from the outside to the inside flows through.

10. Method according to claim 6, wherein the step of creating the air flow that passes through the two heat exchangers, first and second, is carried out along a single path inside the room and said command step of the four-way valve is carried out to divert the flow of the working fluid towards the second heat exchanger, which the air passes through before exiting the apparatus.
